# EUROPÄISCHE PATENTANMELDUNG

(11) **EP 1 308 606 A2**
(43) Veröffentlichungstag der Anmeldung: **07.05.2003**
(21) Anmeldenummer: 02023111.4
(22) Anmeldetag: 15.10.2002
(51) Int. Cl.: F01N 3/022, F01N 3/029, F01N 3/023

(54) **Dieselpartikelfilter sowie Dieselmotor mit einem Dieselpartikelfilter**

(30) Priorität: 06.11.2001 DE 20117862 U
(71) Anmelder: PUReM Abgassysteme GmbH & Co. KG, 58706 Menden (DE); DaimlerChrysler AG, 70567 Stuttgart (DE)
(72) Erfinder: Hüthwohl, Georg, Dr.-Ing., D-59494 Soest (DE); Wenninger, Günter, D-70599 Stuttgart (DE); Neumann, Peter, D-58706 Menden (DE); Schmidt, Eberhard, Prof. Dr., D-42285 Wuppertal (DE); Dittler, Achim, Dr., D-70619 Stuttgart (DE)
(74) Vertreter: Schröter & Haverkamp

(57) **Zusammenfassung**

Dieselpartikelfilter zur Absenkung der Emission von im Abgas eines Dieselmotors enthaltenen Partikeln, **dadurch gekennzeichnet,** daß die bezüglich des Abgasstromes bei einem Betrieb des Dieselmotors anströmseitige Oberfläche des Dieselpartikelfilters (1) derart ausgebildet ist, daß sich eine Adhäsion von nicht verbrennbaren Aschepartikeln (4) an dieser Oberfläche des Dieselpartikelfilters (1) allenfalls nur mit solchen Bindungskräften einstellt, daß die Aschepartikel (4) mit einem Fluid und/oder durch Schwingungseinwirkung von dieser Oberfläche des Dieselpartikelfilters (1) entfernbar sind.

## Beschreibung

Die Erfindung betrifft einen Dieselpartikelfilter zur Absenkung der Emission von in dem Abgas eines Dieselmotors enthaltenen Partikeln. Ferner betrifft die Erfindung einen Dieselmotor mit einem Abgasstrang und einem in dem Abgasstrang angeordneten Dieselpartikelfilter.

Dieselpartikelfilter werden in Abgassträngen von Dieselmotoren eingesetzt, um die im Abgas enthaltenen Rußpartikel zurückzuhalten, damit durch diese Maßnahme die Rußpartikelemission reduziert ist. Die in dem Abgasstrom enthaltenen Rußpartikel sammeln sich beim Betrieb des Dieselmotors an der anströmseitigen Seite des Dieselpartikelfilters an. Um den Abgasgegendruck nicht unnötig zu erhöhen, wird der angesammelte Ruß in regelmäßigen Zeitabständen oder in Abhängigkeit von dem bei zunehmender Rußablagerung ansteigendem Abgasgegendruck durch Oxidation im Zuge eines Verbrennungsprozesses entfernt. Auf diese Weise kann ein Dieselpartikelfilter regeneriert werden.

In den sich auf der Oberfläche des Dieselpartikelfilters ablagernden Rußpartikeln sind jedoch auch solche enthalten, die nicht verbrennbar sind und bei einer solchen Filterregeneration als nicht verbrennbare anorganische Bestandteile zurückbleiben. Diese Bestandteile sind im Rahmen der nachfolgenden Ausführungen als Asche bezeichnet. Die Asche verbleibt auf der Oberfläche oder im porösen Filterkörper zurück.

Über die Betriebszeit des Dieselmotors bzw. seines Dieselpartikelfilters akkumuliert zunehmend mehr Asche auf der anströmseitigen Oberfläche des Dieselpartikelfilters, was ebenfalls eine unerwünschte Erhöhung des Abgasgegendruckes zur Folge hat. Aus diesem Grunde muß der Dieselpartikelfilter in regelmäßigen Abständen von diesen Ascheablagerungen befreit werden. Zum Reinigen eines solchen Dieselpartikelfilters ist beispielsweise in der DE 41 34 949 C2 oder auch in der DE 199 59 955 A1 vorgeschlagen worden, den Dieselpartikelfilter dergestalt im Abgasstrang anzuordnen, daß in Strömungsrichtung des Abgases vor dem Dieselpartikelfilter und hinter dem Dieselpartikelfilter ein Zugang geschaffen ist. Durch den Zugang kann entgegen der Strömungsrichtung des Abgases ein Fluid in den Abgasstrang zum Durchströmen des Dieselpartikelfilters entgegen der Durchströmungsrichtung des Abgases und durch die anströmseitig vor dem Dieselpartikelfilter liegende Öffnung wieder abgezogen werden. Durch diesen Reinigungsstrom soll sich die Asche von der anströmseitigen Oberfläche des Dieselpartikelfilters lösen und aus dem Abgasstrang herausgebracht werden. Als Fluid können flüssige oder gasförmige Phasen eingesetzt sein. Vorgeschlagen wird in dem oben genannten Stand der Technik auch, daß der Dieselpartikelfilter aus dem Abgasstrang herausgenommen und in entsprechenden Reinigungsbädern von den Ascheablagerungen befreit werden kann.

Problematisch ist bei den vorbekannten Verfahren jedoch, daß eine Reinigung des Dieselpartikelfilters nur unzureichend erfolgt. Zurückbleiben in aller Regel fleckenartig angeordnete Ascheansammlungen.

Ausgehend von diesem diskutierten Stand der Technik liegt der Erfindung daher die Aufgabe zugrunde, einen eingangs genannten Dieselpartikelfilter dergestalt weiterzubilden, daß auch unter Einsatz herkömmlicher Reinigungsmethoden eine bessere Reinigung eines Dieselpartikelfilters von den Ascheablagerungen möglich ist.

Diese Aufgabe wird erfindungsgemäß dadurch gelöst, daß die bezüglich des Abgasstromes bei einem Betrieb des Dieselmotors anströmseitige Oberfläche des Dieselpartikelfilters derart ausgebildet ist, daß sich eine Adhäsion von nicht verbrennbaren Aschepartikeln an dieser Oberfläche des Dieselpartikelfilters allenfalls nur mit solchen Bindungskräften einstellt, daß die Aschepartikel mit einem Fluid und/oder durch Schwingungseinwirkung von dieser Oberfläche des Dieselpartikelfilters entfernbar sind.

Ferner wird diese Aufgabe erfindungsgemäß dadurch gelöst, daß dem zum Betrieb des Dieselmotors notwendigen Kraftstoff, dem Motoröl, der Ansaugluft und/oder dem Abgasstrom ein bei einem Betrieb des Dieselmotors die Haftung der Aschepartikel untereinander und/oder an der anströmseitigen Oberfläche des Dieselpartikelfilters herabsetzendes Additiv zugesetzt ist.

Bei dem erfindungsgemäßen Dieselpartikelfilter ist zumindest dessen anströmseitige Oberfläche so ausgebildet, daß Aschepartikel an dieser Oberfläche nur noch mit solchen Bindungskräften - wenn überhaupt - anzuhaften vermögen, daß die Aschepartikel beispielsweise durch gegenströmiges Einblasen eines Fluids ohne weiteres von dem Dieselpartikelfilter wieder entfernt werden können. Zu diesem Zweck kann beispielsweise die anströmseitige Oberfläche des Dieselpartikelfilters als bezüglich der Bindungskräfte der Aschepartikel mit dem Dieselpartikelfilter bindungskraftreduzierte Oberfläche ausgestaltet sein. Eine solche Oberfläche kann ausgebildet sein, um eine Haftungsminimierung bzw. eine Bindungskraftminimierung aufgrund eines als Trennschicht bzw. Trennmedium eingesetzten Stoffes und/oder aufgrund von bestimmten Nanostrukturen einer solchen Trennschicht und/oder der Filteroberfläche selbst zu erreichen. Haftungsmindernde Trennschichten können auf unterschiedliche Weise auf der anströmseitigen Oberfläche des Dieselpartikelfilters aufgetragen sein, wobei beispielsweise ein Auftrag durch Absatz aus einer Lösung oder einer Suspension erfolgen kann. Gleichfalls kann diese Schicht mit Hilfe eines Aerosols oder auch durch ein Sol-Gel-Verfahren aufgetragen werden.

In einer weiteren Ausgestaltung der Erfindung ist die anströmseitige Oberfläche des Dieselpartikelfilters im Zuge eines Glättungsprozesses geglättet worden, so daß die wirksame Oberfläche, an denen Aschepartikel anhaften können, erheblich reduziert ist. Diese glatte bzw. geglättete Oberfläche kann zusätzlich mit einer bindungskraftreduzierten Schicht beschichtet sein.

In einer weiteren Ausgestaltung der Erfindung kann die anströmseitige Oberfläche des Dieselpartikelfilters mit einer Trennschicht beschichtet sein, deren chemische Bindungseigenschaften beeinflußbar sind. Eine solche Einflußnahme auf die chemischen Bindungeigenschaften einer solchen Schicht kann beispielsweise durch ein zugeführtes Fluid erfolgen, bei dessen Zuführung sich die auf den Dieselpartikelfilter aufgetragene Schicht zersetzt und zusammen mit der darauf akkumulierten Asche von dem Dieselpartikelfilter entfernt wird. Bei Einsatz eines solchen Dieselpartikelfilters ist nach einer derartigen Reinigung die zersetzte Schicht erneut aufzutragen. Die aufgetragene Schicht fungiert daher als Trennschicht im eigentlichen Sinne.

Zur Verbesserung der Reinigung eines in einem Abgasstrang integrierten Dieselpartikelfilters von den darauf abgelagerten Aschepartikeln kann ebenfalls vorgesehen sein, daß dem zum Betrieb des Dieselmotors notwendigen Kraftstoff, dem Motoröl, der Ansaugluft und/oder dem Abgasstrom ein bei einem Betrieb des Dieselmotors die Haftung der Aschepartikel untereinander und/oder an der anströmseitigen Oberfläche des Dieselpartikelfilters herabsetzendes Additiv zugesetzt ist.

Eins solches Additiv kann beispielsweise über eine dem Abgasstrang zugeordnete Einrichtung in den Abgasstrom eingedüst werden, das mit den in dem Abgasstrom enthaltenen Rußpartikeln verwirbelt wird und entweder eine chemische Verbindung mit den Rußpartikeln eingeht oder sich zusammen mit diesen ablagert und ihre haftungsmindernden Eigenschaften bei einem Rußabbrand freisetzt.

Gemäß einer weiteren Ausgestaltung der Erfindung ist eine Entfernung der Aschepartikel durch mechanische Schwingungseinwirkung vorgesehen, die beispielsweise durch Anordnen eines Ultraschallkopfes am Dieselpartikelfilter möglich ist.

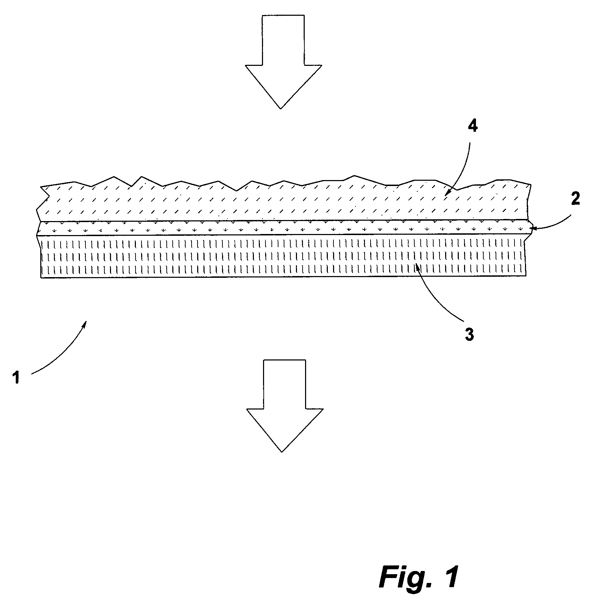

Figur 1 zeigt schematisiert die anströmseitige Oberfläche eines Dieselpartikelfilters 1, der in nicht näher dargestellter Art und Weise in dem Abgasstrom eines Dieselmotors angeordnet ist. Die Strömungsrichtung des Abgasstromes ist mit Pfeilen gekennzeichnet. Die anströmseitige Oberfläche des Dieselpartikelfilters 1 ist mit einer Trennschicht 2 beschichtet. Die Trennschicht 2 ist porös, damit das Abgas durch die Schicht 2 und in die Filterplatten 3 des Dieselpartikelfilters 1 einströmen kann. Figur 1 zeigt den Dieselpartikelfilter 1 mit einer auf der Trennschicht 2 abgelagerten Ascheschicht 4 vor einer Reinigung des Filters. Durch die Trennschicht 2 sind die Bindungskräfte zwischen der Asche 4 und den Filterplatten 3 des Dieselpartikelfilters 1 gegenüber den Bindungskräften, die sich einstellen würden, wenn die Ascheschicht unmittelbar auf der Oberfläche der Filterplatte 3 anhaften würde, insofern herabgesetzt, daß die Trennschicht 2 durch Einsatz etwa eines Fluids von den Filterplatten 3 ohne weiteres gelöst werden kann. Der Dieselpartikelfilter 1 kann daher mit der herkömmlichen gegenströmigen Fluidtechnik gereinigt werden. Aus Figur 1 zeigt sich ebenfalls deutlich, daß, für den Fall, daß die Trennschicht 2 durch Einsatz eines Fluides, beispielsweise eines Gases sich zersetzt, die Ascheschicht 4 ohne weiteres mit der Trennschicht 2 von dem Dieselpartikelfilter 1 bzw. seinen Filterplatten 3 entfernt wird.

Eine Reinigung der Filteroberfläche des Dieselpartikelfilters kann auch erfolgen, indem die auf der anströmseitigen Oberfläche der Filterplatten angesammelten eine Ascheschicht ausbildenden Aschepartikel miteinander dergestalt verbunden werden, daß ein Ablösen der Ascheschicht erleichtert ist. Das Verbinden der Aschepartikel kann etwa durch ein Verbacken, Versintern oder ein Verkleben der Aschepartikel miteinander erfolgen. Dabei kann beispielsweise Kleber als Dampf auf die Ascheschicht aufgebracht oder der Filter mit der Ascheschicht in eine dünnflüssige aushärtende Masse eingetaucht werden. Durch eine (zusätzliche) thermische Behandlung kann eine Erhärtung einer mit einem Bindemittel (Kleber) durchtränkten Ascheschicht verbessert und demzufolge ein Ablösen von dem Filter erleichtern sein. Bei einem Versintern der Aschepartikel zur Ausbildung einer Ascheschicht kann dies durch einen extern durchgeführten Prozeß erfolgen.

Aus der Beschreibung der Erfindung wird deutlich, daß mit dem beschriebenen Dieselpartikelfilter sowie mit dem beschriebenen Dieselmotor enthaltend einen Dieselpartikelfilter eine wirksame Reinigung mit einfachen Mitteln realisierbar ist.

## Patentansprüche

1. Dieselpartikelfilter zur Absenkung der Emission von im Abgas eines Dieselmotors enthaltenen Partikeln, **dadurch gekennzeichnet, daß** die bezüglich des Abgasstromes bei einem Betrieb des Dieselmotors anströmseitige Oberfläche des Dieselpartikelfilters (1) derart ausgebildet ist, daß sich eine Adhäsion von nicht verbrennbaren Aschepartikeln (4) an dieser Oberfläche des Dieselpartikelfilters (1) allenfalls nur mit solchen Bindungskräften einstellt, daß die Aschepartikel (4) mit einem Fluid und/oder durch Schwingungseinwirkung von dieser Oberfläche des Dieselpartikelfilters (1) entfernbar sind.

2. Dieselpartikelfilter nach Anspruch 1, **dadurch gekennzeichnet, daß** die anströmseitige Oberfläche des Dieselpartikelfilters (1) eine bezüglich der Bindungskräfte der Aschepartikel mit dem Dieselpartrikelfilter (1) bindungskraftreduzierte Oberfläche aufweist.

3. Dieselpartikelfilter nach Anspruch 2, **dadurch gekennzeichnet, daß** die bindungskraftreduzierte Oberfläche Nanostrukturen zur Haftungsminderung aufweist

4. Dieselpartikelfilter nach einem der Ansprüche 1 bis 3, **dadurch gekennzeichnet, daß** die anströmseitige Oberfläche des Dieselpartikelfilters (1) eine weitestgehend glatte Oberfläche aufweist.

5. Dieselpartikelfilter nach Anspruch 4, **dadurch gekennzeichnet, daß** die anströmseitige Oberfläche des Dieselpartikelfilters (1) durch einen Glättungsprozeß geglättet ist.

6. Dieselpartikelfilter nach Anspruch 1, **dadurch gekennzeichnet, daß** die anströmseitige Oberfläche des Dieselpartikelfilters (1) mit einer bezüglich ihrer chemischen und/oder physikalischen Bindungseigenschaften beeinflußbaren Trennschicht (2) beschichtet ist.

7. Dieselmotor mit einem Abgasstrang und einem in dem Abgasstrang angeordneten Dieselpartikelfilter (1) nach einem der Ansprüche 1 bis 6, **dadurch gekennzeichnet, daß** dem zum Betrieb des Dieselmotors notwendigen Kraftstoff, dem Motoröl, der Ansaugluft und/oder dem Abgasstrom ein bei einem Betrieb des Dieselmotors die Haftung der Aschepartikel untereinander und/oder an der anströmseitigen Oberfläche des Dieselpartikelfilters (1) herabsetzendes Additiv zugesetzt ist.

8. Dieselmotor mit einem Abgasstrang und einem in dem Abgasstrang angeordneten Dieselpartikelfilter (1), **dadurch gekennzeichnet, daß** dem zum Betrieb des Dieselmotors notwendigen Kraftstoff, dem Motoröl, der Ansaugluft und/oder dem Abgasstrom ein bei einem Betrieb des Dieselmotors die Haftung der Aschepartikel untereinander und/oder an der anströmseitigen Oberfläche des Dieselpartikelfilters (1) herabsetzendes Additiv zugesetzt ist.

9. Dieselmotor nach Anspruch 7 oder 8, **dadurch gekennzeichnet, daß** der Abgasstrang eine Einrichtung umfaßt, durch die bei einem Betrieb des Dieselmotors ein die Haftung der Aschepartikel an der anströmseitigen Oberfläche des Dieselpartikelfilters herabsetztendes Additiv einbringbar ist.
